# EUROPÄISCHE PATENTSCHRIFT

(11) **EP 1 556 636 B1**
(45) Veröffentlichungstag und Bekanntmachung des Hinweises auf die Patenterteilung: **14.05.2008**
(21) Anmeldenummer: 03775283.9
(22) Anmeldetag: 03.11.2003
(51) Int. Cl.: F16H 61/06

(54) **VERFAHREN UND SYSTEM ZUR ADAPTIERUNG EINER AUTOMATISCHEN KUPPLUNG**
METHOD AND SYSTEM FOR ADJUSTING AN AUTOMATIC CLUTCH
PROCEDE ET SYSTEME POUR ADAPTER UN EMBRAYAGE AUTOMATIQUE

(30) Priorität: 01.11.2002 DE 10251428
(43) Veröffentlichungstag der Anmeldung: 27.07.2005
(73) Patentinhaber: Spicer Off-Highway Belgium N.V., B-8200 Brugge (BE)
(72) Erfinder: DUSKUNOVIC, Ivana, B-9000 Gent (BE); T'HOOFT, Dries, B-8340 Sijsele-Damme (BE); VANSTECHELMAN, Kris, B-8000 Brugge (BE)
(74) Vertreter: Rehberg Hüppe + Partner
(86) Internationale Anmeldenummer: PCT/EP2003/012253
(87) Internationale Veröffentlichungsnummer: WO 2004/040172

(56) Entgegenhaltungen:
- EP-A- 0 435 374
- EP-A- 0 931 961
- DE-A- 19 739 215

## Beschreibung

Die Erfindung betrifft ein Verfahren und ein System zur Adaptierung einer automatisch angesteuerten Kupplung, die in einem Getriebe, insbesondere in einem Lastschaltgetriebe, eines Kraftfahrzeugs einem Drehmomentwandler nachgeschaltet ist und die über einen Kupplungssteuerdruck beim Einkuppeln angesteuert wird, wobei ein Verlauf des Kupplungssteuerdrucks über der Zeit eingestellt wird, um einen Einkuppelvorgang mit vorgegebenen Charakteristika zu realisieren.

### STAND DER TECHNIK

Von einer automatisch angesteuerten Kupplung wird gewünscht, dass sie weich einkuppelt. D.h., Drehzahlunterschiede der mit der Kupplung zu verbindenden Wellen sollen über den Einkuppelvorgang hinweg sanft und ruckfrei beseitigt werden. Dies gilt in einem Lastschaltgetriebe nicht nur für die Kupplungen, mit denen die Fahrtrichtung eines Kraftfahrzeugs festgelegt werden, sondern auch für alle Kupplungen, mit denen zwischen unterschiedlichen Übersetzungen des Lastschaltgetriebes geschaltet wird. Der Ablauf des Einkuppelvorgangs einer automatischen Kupplung wird über den Kupplungssteuerdruck festgelegt, mit dessen Hilfe die Kupplungsscheiben aneinander herangeführt und gegeneinander gedrückt werden. Dabei ist es bekannt, dass anfangs in eine sogenannten Füllphase ein relativ hoher Kupplungssteuerdruck sinnvoll ist, um die Kupplungsscheiben schnell einander anzunähern. Danach ist in einer sogenannten Modulationsphase der Kupplungssteuerdruck von einem niedrigeren Niveau aus zu steigern, um die Reibung zwischen den Scheiben der Kupplung, über die ein Drehzahlausgleich der beiden über die Kupplung beim Einkuppeln verbundenen Wellen,erfolgt, kontrolliert zu erhöhen. Dies bedeutet, dass der Verlauf des Kupplungssteuerdrucks den Verlauf der Drehzahlanpassung der beiden Wellen bestimmt. Um also einen Einkuppelvorgang mit vorgegebenen Charakteristika zu realisieren, muss der Verlauf des Kupplungssteuerdrucks hierauf abgestimmt werden.

Auch bei der Serienfertigung grundsätzlich gleicher Kraftfahrzeuge stellt sich heraus, dass eine individuelle Einstellung des Verlaufs des Kupplungssteuerdrucks für jede Kupplung sinnvoll oder gar erforderlich ist, um tatsächlich sanfte und druckfreie Einkuppelvorgänge zu realisieren. Selbst wenn aber die Einstellung des Verlaufs des Kupplungssteuerdrucks zu Beginn der Lebensdauer eines Kraftfahrzeugs so ist, dass ein Einkuppelvorgang mit vorgegebenen Charakteristika realisiert wird, wird es häufig passieren, dass diese vorgegebenen Charakteristika nach gewisser Zeit nicht mehr erreicht werden, weil Verschleißerscheinungen im Bereich der Kupplung und an anderen Stellen des Kraftfahrzeugs bei gleichbleibendem Verlauf des Kupplungssteuerdrucks über der Zeit zu einer anderen Reaktion der Kupplung führen.

Ein weiteres Problem bei der Einstellung eines optimalen Verlaufs des Kupplungssteuerdrucks für eine Kupplung besteht darin, dass hierfür bislang subjektive Kriterien verwendet werden. D. h., der Verlauf des Kupplungssteuerdrucks über der Zeit wird bislang solange verändert, bis eine einstellende Person das subjektive Gefühl hat, ein Einkuppelvorgang mit den vorgegebenen Charakteristika sei erreicht. Das individuelle Empfinden, ob ein sanfter und ruckfreier Einkuppelvorgang realisiert wird, ist aber von Person zu Person unterschiedlich. Eine Automatisierung der Einstellung des Verlaufs des Kupplungssteuerdrucks für die Kupplung ist mit dem Kriterium des individuellen Empfindens einer Testperson grundsätzlich nicht möglich. Wünschenswert wäre es aber gerade, eine Kupplung automatisiert an ein individuelles Fahrzeug und dessen aktuellen Betriebszustand automatisch zu adaptieren.

EP 0 435 374 B1 betrifft ein Verfahren zur Steuerung eines Gangwechsels in einem Automatikgetriebe eines Kraftfahrzeugs. Zwischen ein Getriebe und eine Brennkraftmaschine ist ein Drehmomentwandler zwischengeschaltet. Ein Aktivieren und Deaktivieren von Getriebegängen wird herbeigeführt durch selektives Ein- und Ausrücken von Bremsen und Kupplungen, die den einzelnen Getriebegängen zugeordnet sind. Die Bremsen und Kupplungen werden über Steuerventile aktiviert, die ein Füllen und Entleeren der hydraulischen Aktuatoren der Kupplungen und Bremsen bewirken. Während eines Gangwechsels erfolgt ein Ausrücken einer ersten Kupplung und ein Einrücken einer zweiten Kupplung. Das Einrücken einer Kupplung erfordert zunächst die Aufbringung eines möglichst hohen Drucks für eine Füllzeit, die beendet ist, wenn ein erster Kupplungskontakt der Kupplungshälften auftritt (so genannter "kiss-point"). Mit Erreichen dieses Zustands fällt der Druck auf einen Anfangswert ab und steigt von diesem wieder an, bis die Turbine des Drehmomentwandlers um einen gegebenen Betrag ihre Drehzahl verringert infolge des übertragenen Kupplungsmoments. Hieran anschließend wird der Druck der Kupplung derart geregelt, dass ein Kupplungsschlupf einem gegebenen Schlupfprofil folgt. Wird eine Synchrongeschwindigkeit erreicht, wird der Druck in dem Aktuator der Kupplung auf einen maximalen Wert erhöht, um ein vollständiges Schließen der Kupplung und eine Vervollständigung des Schaltvorgangs zu bewirken. Über ein Adaptionsverfahren werden in Abhängigkeit von verschiedenen, während des Kupplungsvorgangs ermittelten Kriterien Parameter der Kupplungsdruckansteuerung angepasst. Das in EP 0 345 374 B1 offenbarte Adaptionsverfahren findet Einsatz während des Betriebs des Kraftfahrzeugs, also für einen Gangwechsel für ein fahrendes Kraftfahrzeug.

DE 197 39 215 A1 offenbart ein Verfahren zur Einstellung eines Haltedruckes während einer vorgegebenen Füllzeit. Hierzu wird sukzessive während einer vorgegebenen Füllzeit der Druck während des Befüllens des Aktuators der Kupplung, hier als Haltedruck bezeichnet, erhöht, bis dieser ausreichend ist, um am Ende der Füllzeit einen Kontakt der Kupplungshälften herbeizuführen.

Schließlich offenbart EP 0 931 961 B1 ein Verfahren zum Eichen des erforderlichen Haltedrucks einer zu eichenden Kupplung.

### AUFGABE DER ERFINDUNG

Der Erfindung liegt die Aufgabe zugrunde, ein Verfahren und ein System der eingangs beschriebenen Art aufzuzeigen, mit denen die Adaptierung der Kupplung bezüglich des Verlaufs des Kupplungssteuerdrucks über der Zeit automatisiert durchführbar ist, um sie mit geringem Aufwand bei einem fertigen individuellen Fahrzeug und wiederholt während dessen Lebensdauer durchführen zu können.

### LÖSUNG

Die Aufgabe der Erfindung wird erfindungsgemäß durch ein Verfahren mit den Merkmalen des Patentanspruchs 1 und ein System mit den Merkmalen des Patentanspruch 11 gelöst. Vorteilhafte Ausführungsformen sind in den Unteransprüchen 2 bis 10 bzw. 12 bis 20 beschrieben.

### BESCHREIBUNG DER ERFINDUNG

Bei der Erfindung wird ein objektives, von dem persönlichen Empfinden einer Testperson unabhängiges Kriterium aufgestellt, ob mit der jeweiligen Kupplung ein Einkuppelvorgang mit vorgegebenen Charakteristika realisiert wird oder nicht. Zu diesem Zweck wird die Kupplung unter definierten Bedingungen geprüft. Diese definierten Bedingungen werden durch einen Vorgang gesetzt, der unter der Maßgabe ausgewählt ist, dass sich die Drehzahl einer Ausgangswelle des der Kupplung vorgeschalteten Drehmomentwandlers zur Anpassung an die tatsächliche Geschwindigkeit des Fahrzeugs beim Einkuppeln der Kupplung ändert. D.h., es wird geschaut, wie sich bei diesem Vorgang die anfangs nicht passende Drehzahl der Ausgangswelle des Drehmomentwandlers an eine im Wesentlichen feste Drehzahl der Ausgangswelle des Getriebes anpasst. Dabei sind mit Hilfe der Kupplung Trägheitsmomente der Ausgangswelle und der mit ihr getrieblich bis zu der Kupplung verbundenen Getriebeteile und Drehmomente des Drehmomentwandlers durch Reibung zwischen den Scheiben der Kupplung zu überwinden. Wenn die Anpassung der Drehzahl der Ausgangswelle des Drehmomentwandlers bei diesem Vorgang sanft und druckfrei erfolgt, darf davon ausgegangen werden, dass mit der Kupplung generell ein Einkuppelvorgang mit diesen gewünschten Charakteristika realisiert wird. Um diese Überprüfung automatisch vornehmen zu können, wird bei der Erfindung für den ausgewählten und ausgelösten Vorgang ein idealer Verlauf der Drehzahl der Ausgangswelle über der Zeit festgelegt, der dem Einkuppelvorgang mit vorgegebenen Charakteristika entspricht. Hierbei handelt es sich um eine objektive Festlegung der Drehzahl der Ausgangswelle des Drehmomentwandlers zu jedem Zeitpunkt des Vorgangs. Mit diesem idealen Verlauf wird der gemessene tatsächliche Verlauf der Drehzahl der Ausgangswelle verglichen, um etwaige Abweichungen festzustellen. Wenn keine Abweichungen gegeben sind, ist der Verlauf des Kupplungssteuerdrucks über der Zeit bereits optimal eingestellt. Wenn Abweichungen vorliegen, ist zu prüfen, ob diese einen vorbestimmten Grenzwert überschreiben, der eine Veränderung des Kupplungssteuerdrucks notwendig macht, um diese Abweichungen auf ein tolerierbares Maß zu reduzieren. Wenn ja, wird der Verlauf des Kupplungssteuerdrucks über der Zeit unter Verwendung der einzelnen Abweichungen des gemessenen tatsächlichen Verlaufs der Drehzahl der Ausgangswelle von ihrem idealen Verlauf verändert. Für diesen gesamten Vorgang ist nach dem Starten der Adaptierung kein äußerer Eingriff notwendig. Der gesamte Vorgang kann vollautomatisch ablaufen. Es sind aber auch halbautomatische Ausführungsformen denkbar, bei denen der Fahrer des Kraftfahrzeugs den der Adaptierung zugrundeliegenden Vorgang auslöst und nur die nachfolgenden Schritte des erfindungsgemäßen Verfahrens automatisch ablaufen.

Als Vorgang, der der Adaptierung zugrundegelegt wird und in dem sich die Drehzahl der Ausgangswelle des Drehmomentwandlers zur Anpassung an die tatsächliche Geschwindigkeit des Fahrzeugs beim Einkuppeln der Kupplung ändert, wird das Einkuppeln der Kupplung bei stehendem Fahrzeug mit laufendem Motor und blockierten Antriebsrädern gewählt. Bei diesem Vorgang ändert sich die Drehzahl der Ausgangswelle des Drehmomentwandlers beim Einkuppeln von ihrer bisherigen Drehzahl auf null, um sich der Geschwindigkeit null des Kraftfahrzeugs anzupassen. Dieser spezielle Vorgang ist insbesondere dann bevorzugt, wenn die Kupplung bei einem neuen Fahrzeug erstmalig adaptiert wird oder eine Neuadaptierung im Rahmen einer Wartung des Fahrzeugs erfolgt.

Vorzugsweise wird bei dem der Adaptierung zugrundezulegenden Vorgang die Drehzahl einer Eingangswelle des Drehmomentwandlers konstant gehalten, ebenso wie die Geschwindigkeit des Fahrzeugs während des Vorgangs vorzugsweise konstant ist, damit der Vorgang insgesamt möglichst definierte Randbedingungen aufweist. Hierzu gehört auch, dass die Einstellung des Drehmomentwandlers während des Vorgangs möglichst nicht verstellt wird.

Bei der Erfindung ist es bevorzugt, den idealen Verlauf der Drehzahl der Ausgangswelle bei dem der Adaptierung zugrundezulegenden Vorgang unter Verwendung mindestens einer mathematischen Funktion festzulegen, um die Handhabung des idealen Verlaufs der Drehzahl zu erleichtern. Eine mathematische Funktion ist mit weniger Aufwand zu beschreiben und zu speichern als eine punktweise Definition des idealen Verlaufs. Grundsätzlich ist aber auch eine Punkt für Punkt-Festlegung des idealen Verlaufs der Drehzahl der Ausgangswelle ohne mathematische Beziehung der Punkte untereinander möglich.

Konkret kann der ideale Verlauf der Drehzahl der Ausgangswelle durch Exponentialfunktionen aufgebaut werden. Als besonders günstig zur Darstellung eines idealen Verlaufs der Drehzahl der Ausgangswelle hat sich eine Gaußfunktion herausgestellt. Die Glockenform einer in ihrer Breite auf die Gesamtdauer des Kupplungsvorgangs abgestimmten Gaußfunktion entspricht sehr genau einem sanften und ruckfreien Einkuppeln der Kupplung. Der ideale Verlauf der Drehzahl der Ausgangswelle kann auch unter Verwendung sogenannter Weibull-Funktionen (www.weibull.com) festgelegt werden.

In der Praxis hat sich aber herausgestellt, dass es zur Adaptierung einer Kupplung nach dem neuen Verfahren häufig ausreichend ist, den idealen Verlauf der Drehzahl der Ausgangswelle für den Vergleich mit deren realen Verlauf mit einer einzigen linearen Funktion zu beschreiben. Durch die zwangsläufige Stetigkeit der Steigung des tatsächlichen Verlaufs der Drehzahl der Ausgangswelle ist ein solcher linearer Verlauf als Kriterium für die Qualität des tatsächlichen Verlaufs ausreichend. Dies gilt insbesondere dann, wenn neben der geometrischen Abweichung des tatsächlichen Verlaufs von dem idealen Verlauf zusätzliche Beurteilungskriterien für den tatsächlichen Verlauf der Drehzahl der Ausgangswelle herangezogen werden. Hierzu gehören beispielsweise das Fehlen eines ungewollten Auftretens einer Richtungsänderung der Drehzahländerung oder das Fehlen von unerwünschten Drehzahlsprüngen.

Der ideale Verlauf der Drehzahl der Ausgangswelle über der Zeit ist bei der Erfindung so festzulegen, dass er zu der tatsächlichen absoluten Drehzahländerung während des der Adaptierung zugrundezulegenden Vorgangs passt. Dies wird beispielsweise dadurch erreicht, dass der ideale Verlauf der Drehzahl der Ausgangswelle zunächst unabhängig von der tatsächlichen absoluten Drehzahländerung festgelegt und dann für den Vergleich mit dem tatsächlichen Verlauf auf die tatsächliche absolute Drehzahländerung während des Vorgangs skaliert wird.

Die erfindungsgemäße Adaptierung der Kupplung ist häufig nicht in nur einem einzigen Änderungsschritt durchführbar. Allein zur Kontrolle des Adaptierungsergebnisses ist es sinnvoll, nach dem automatischen Ändern des Verlaufs des Kupplungssteuerdrucks über der Zeit den der Adaptierung zugrundezulegenden Vorgang zu wiederholen und das Adaptierungsergebnis zu überprüfen. Wiederholungen sind so lange angezeigt, bis die Überprüfung ergibt, dass verbleibende Abweichungen zwischen dem tatsächlichen und dem idealen Verlauf der Drehzahl der Ausgangswelle des Drehmomentwandlers einen vorbestimmten Grenzwert nicht mehr überschreiten.

Als Maßstab für die Abweichungen des tatsächlichen Verlaufs der Drehzahl der Ausgangswelle über der Zeit von dem idealen Verlauf kann der quadratische Abstand der beiden Verläufe verwendet werden, der auf große kurzzeitige Drehzahlunterschiede stärker reagiert als auf etwas längere kleinere Drehzahlunterschiede. Bei dem Kriterium des quadratischen Abstands handelt es sich um ein bewährtes Kurvenvergleichskriterium, das auch als Regelgröße für die automatisierte Anpassung des tatsächlichen Verlaufs an den Idealverlauf der Drehzahl der Ausgangswelle des Drehmomentwandlers hervorragend geeignet ist.

Umgesetzt werden kann die Berechnung des quadratischen Abstand der Verläufe, indem die Summe der quadratischen Abstände der Drehzahlen zu bestimmten Zeitpunkten berechnet wird. Andere bei der Erfindung auch grundsätzlich anwendbare Kriterien für die Abweichung der beiden Verläufe der Drehzahl der Ausgangswelle des Drehmomentwandlers sind die Summe der absoluten Abstände der beiden Drehzahlen zu bestimmten Zeitpunkten, die Summe der Quadrate der normalen Abstände oder auch die Summe der absoluten normalen Abstände. Weiter Kriterien sind dem Fachmann bekannt.

Wie bereits oben angesprochen wurde, können zusätzliche Qualitätskriterien bei der Bewertung des tatsächlichen Verlaufs der Drehzahl der Ausgangswelle Berücksichtigung finden. Dies kann in der Weise geschehen, dass der Wert einer Abweichung von dem idealen Verlauf hochgesetzt wird, wenn die Änderung der Drehzahl der Ausgangswelle eine unerwünschte Richtungsänderung oder unerwünschte Sprünge aufweist.

Die eigentliche Anpassung des tatsächlichen Verlaufs der Drehzahl der Ausgangswelle des Drehmomentwandlers an ihren idealen Verlauf wird in der Regel ein iterativer Prozess sein, bei dem der Verlauf des Kupplungssteuerdrucks über der Zeit in kleinen oder kleiner werdenden Schritten geändert wird, bis die Abweichungen einen Grenzwert einhalten. Dabei kann die Annäherung an einen optimalen Verlauf des Kupplungssteuerdrucks dadurch beschleunigt werden, dass seine Änderungen unter Zuhilfenahme von Erfahrungswerten zu der Reaktion des Verlaufs der Drehzahl der Ausgangswelle des Drehmomentwandlers auf diese Veränderungen vorgenommen werden. Diese Erfahrungswerte können in Form mathematischer Funktionen der vorliegenden Abweichungen des tatsächlichen von dem idealen Verlauf der Drehzahl der Ausgangswelle des Drehmomentwandlers oder auch in Form einer Wertetabelle genutzt werden.

Wenn der Verlauf des Kupplungssteuerdrucks so geändert ist, dass der tatsächliche Verlauf der Drehzahl der Ausgangswelle des Drehmomentwandlers bei dem der Adaptierung zugrundezulegenden Vorgang dem idealen Verlauf ausreichend angenähert ist, wird der geänderte Verlauf des Kupplungssteuerdrucks über der Zeit gespeichert und so lange beim Einkuppeln der Kupplung verwendet, bis die Adaptierung erneut durchgeführt wird. Die erneute Durchführung der Adaptierung kann dabei auch nach einer gewissen Lebensdauer des Kraftfahrzeugs automatisch ausgelöst werden.

Die erfindungsgemäße Adaptierung wird vorzugsweise für jede Kupplung des Getriebes des jeweiligen Kraftfahrzeugs vorgenommen. Vorteilhafterweise muss dazu immer nur die Drehzahl derselben Ausgangswelle des Drehmomentwandlers beobachtet werden. Die Verläufe des Kupplungssteuerdrucks über der Zeit sind aber für jede Kupplung separat einzustellen und zu speichern.

Die für ein System zur Durchführung der erfindungsgemäßen Adaptierung notwendigen Mittel können neben einem Drehzahlmesser für die Drehzahl der Ausgangswelle des Drehmomentwandlers, der im Regelfall bei einem modernen Kraftfahrzeug sowieso vorgesehen sein wird, in einem ebenfalls regelmäßig vorgesehenen Bordcomputer des Kraftfahrzeugs konzentriert sein, in dem der Verlauf des Kupplungssteuerdrucks über der Zeit in veränderbarer Weise gespeichert ist.

### KURZBESCHREIBUNG DER FIGUREN

Im Folgenden wird die Erfindung unter Bezugnahme auf die beigefügten Figuren weiter erläutert und beschrieben.
- **Fig. 1**: zeigt einen Verlauf eines Kupplungssteuerdrucks und einen idealen Verlauf der Drehzahl einer mit der Kupplung verbundenen Ausgangswelle eines Drehmomentwandlers über der Zeit beim Einkuppeln der Kupplung.
- **Fig. 2**: zeigt neben den Verläufen gemäß Fig. 1 einen tatsächlichen Verlauf der Drehzahl der Ausgangswelle über der Zeit beim Einkuppeln der Kupplung, der von dem idealen Verlauf abweicht.
- **Fig. 3**: zeigt ein Flussdiagramm zu einer praktischen Umsetzung des neuen Verfahrens

### FIGURENBESCHREIBUNG

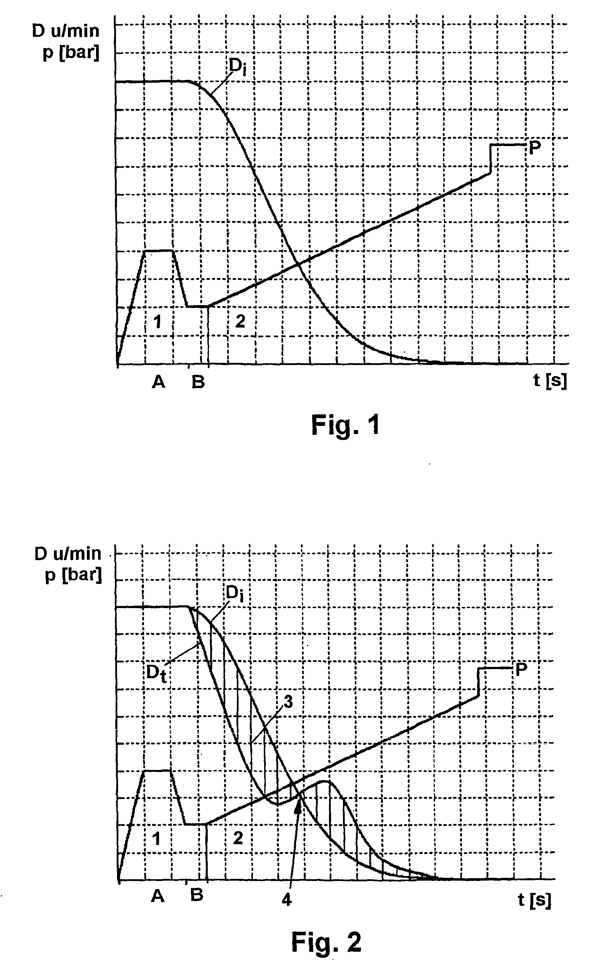

Für eine Kupplung eines Lastschaltgetriebes, dem eine Ausgangswelle eines Drehmomentwandlers eines Kraftfahrzeugs vorgeschaltet ist und bei der es sich beispielsweise um eine Richtungskupplung des Getriebes handelt, zeigt Fig. 1 zeigt den Verlauf eines Kupplungssteuerdrucks p über der Zeit während eines Einkuppelvorgangs. Mit dem Kupplungssteuerdruck p werden die Scheiben der Kupplung beaufschlagt, um einzukuppeln. Hierzu werden die Kupplungsscheiben in einer Füllphase 1 mit dem Kupplungssteuerdruck p zusammengefahren, während in einer sich anschließenden Modulationsphase 2 die Kupplungsscheiben aneinandergedrückt werden, um die Reibung zwischen de Kupplungsscheiben zu erhöhen. Durch den Verlauf des Kupplungssteuerdrucks p über der Zeit werden die Charakteristika eines mit der Kupplung durchgeführten Einkuppelvorgangs festgelegt. Gewünscht ist ein sanfter und ruckfreier Einkuppelvorgang. Ein solcher Einkuppelvorgang gleicht unterschiedliche Drehzahlen zweier mit der Kupplung verbunden werdender Wellen nicht nur stetig aus, sondern beginnt diesen Ausgleich ebenso behutsam, wie er ihn ausklingen lässt. Als Beispiel für einen solchen Einkuppelvorgang ist in Fig. 1 der ideale Verlauf einer Drehzahl Dᵢ der der Kupplung vorgeschalteten Ausgangswelle des Drehmomentwandlers über der Zeit für einen Vorgang aufgetragen, in dem die Kupplung bei stehendem Fahrzeug mit blockierten Antriebsrädern und laufendem Motor eingekuppelt wird, so dass die Drehzahl Dᵢ mit dem Einkuppeln der Kupplung auf null abgesenkt wird. Diese Absenkung setzt mit dem Ende der Füllphase 1 behutsam ein und endet ebenso behutsam beim Erreichen der Drehzahl null. Konkret entspricht der Verlauf der Drehzahl Dᵢ über der Zeit der rechten Hälfte einer Gaußfunktion, die auf den absoluten Drehzahlabfall über den Einkuppelvorgang und die Dauer des Einkuppelvorgangs skaliert ist.

In Fig. 2 ist zusätzlich zu den Verläufen gemäß Fig. 1 ein tatsächlicher Verlauf der Drehzahl Dₜ der Ausgangswelle des Drehmomentwandlers über der Zeit aufgetragen. Dieser tatsächliche Verlauf ist das tatsächliche Resultat des Kupplungssteuerdrucks p während des oben definierten Einkuppelvorgangs, und er weicht von dem idealen Verlauf der Drehzahl Dᵢ bereits zu Beginn der Modulationsphase 2 ab, indem der Drehzahlabfall stärker einsetzt. Eine besonders markante Abweichung der Verläufe der Drehzahlen Dₜ und Dᵢ ist einem Zeitraum 4 gegeben, in dem der tatsächliche Verlauf der Drehzahl Dₜ einen Wiederanstieg der Drehzahl aufweist, der für einen optimalen Einkuppelvorgang nicht tolerabel ist. Unter Zugrundelegung der Abweichungen zwischen den Verläufen der Drehzahlen Dᵢ und Dₜ ist der Kupplungssteuerdruck p so zu verändern, dass sich der tatsächliche Verlauf der Drehzahl Dₜ der Ausgangswelle des Drehmomentwandlers an den idealen Verlauf ihrer Drehzahl Dᵢ annähert. Hierdurch verschwindet automatisch auch der Wiederanstieg der Drehzahl Dₜ in dem Zeitraum 4. Als Maß für die Abweichung kann der zu bestimmten Zeitpunkten ermittelte Unterschied 3 zwischen den Drehzahlen Dᵢ und Dₜ verwendet werden. Bevorzugt ist die Verwendung der Summe der Quadrate der Unterschiede 3, die dem quadratischen Abstand der Verläufe von Dᵢ und Dₜ entspricht. Wenn diese Summe einen vorzugebenden Grenzwert nicht überschreitet, liegt der tatsächliche Verlauf der Drehzahl Dₜ hinreichend nahe an dem idealen Verlauf der Drehzahl Dᵢ, Zusätzlich kann der Verlauf der Drehzahl Dₜ auch daraufhin überprüft und möglicherweise verändert werden, dass er stetig abfällt, um einen Wiederanstieg der Drehzahl der Ausgangswelle des Drehmomentwandlers wie in dem Zeitraum 4 auszuschließen.

Im Detail wird die Füllphase 1 durch folgende Haupteigenschaften charakterisiert. Es geht darum, die Kupplung schnell mit Hydrauliköl zu füllen, um einen die Kupplungsscheiben betätigenden Kolben schnell vorzufahren, damit der eigentliche Einkuppelvorgang, bei dem die Kupplungsscheiben in Kontakt treten, ohne größere Verzögerung beginnen kann. Das Fortschreiten der Füllphase 1 wird durch die zunehmende Füllung der Kupplung mit Hydrauliköl definiert. Diese Füllung ist proportional zu der Fläche unter der Kurve des Kupplungssteuerdrucks p in Fig. 1. Während der Füllphase 1 wird noch kein Drehmoment durch die Kupplung übertragen. Wenn also erstes Drehmoment durch die Kupplung übertragen wird, ist die Füllphase 1 beendet, und die Modulationsphase 2 beginnt. Die Füllphase 1 selbst setzt sich aus zwei Phasen A und B zusammen. Hierbei handelt es sich um eine Phase A, binnen derer eine volle Strömung von Hydrauliköl in die Kupplung erfolgt. Die Phase A umfasst in Fig. 1 den steil ansteigenden Abschnitt, das erste Plateau und den ersten Abfall des Kupplungssteuerdrucks p. In der Phase A wird die Kupplung so schnell als möglich mit Hydrauliköl gefüllt. Hieran schließt sich eine Stabilisierungsphase B an, in der der Kupplungssteuerdruck p auf einen Wert stabilisiert wird, der für das weiche Einsetzen der Modulationsphase 2, d.h. ein weiches Einkuppeln erforderlich ist. Der Verlauf der Kurve des Kupplungssteuerdrucks p und damit auch der Verlauf der Fläche unter dieser Kurve, d.h. die Füllung der Kupplung, über der Zeit können über verschiedene Parameter durch die Steuerung eines Getriebes kontrolliert werden, wie dem Fachmann grundsätzlich bekannt ist.

Haupteigenschaft der Modulationsphase 2 ist ein kontinuierlicher Aufbau von Druck hinter dem die Kupplungsscheiben betätigenden Kolben. Dieser Druckaufbau verläuft üblicherweise im Wesentlichen linear. Er kann aber beispielsweise in Form verschiedener linearer Segmente variiert werden, so dass jede mögliche Form des Druckanstiegs in der Modulationsphase 2 erzielt werden kann. Die Eingriffsmöglichkeiten über verschiedene Parameter in der Steuerung für die Kupplungen eines Getriebes sind dem Fachmann grundsätzlich bekannt.

Der Verlauf des Kupplungssteuerdruck wird typischerweise durch Steuerventile in Form von Magnetventilen gesteuert, mit denen der Kupplungssteuerdruck für die Beaufschlagung der Kupplung mit Hydrauliköl eingestellt wird. Übliche für die Steuerung von Kupplungen verwendete Magnetventile liefern bei vollem Strom durch ihre Magnetspule keinen Druck, während kein Strom vollem Druck entspricht. Die Abhängigkeit des aktuellen Drucks am Ausgang des Magnetventils von dem Strom durch die Magnetspule wird bei der Ansteuerung eines solchen Magnetventils in der Regel durch einen Mikrocontroller des Magnetventils automatisch berücksichtigt. Dem Fachmann sind die Zusammenhänge zwischen dem Strom durch die Magnetspule eines verwendeten Magnetventils und dem Kupplungssteuerdruck im Detail bekannt. Hier reicht es daher aus, den Kupplungssteuerdruck, mit dem die Kupplung beaufschlagt wird, zu betrachten.

Die praktische Implementierung des neuen Verfahrens zur Adaptierung einer automatisch angesteuerten Kupplung dient dem Zweck, ein weiches Einkuppeln sicherzustellen. Dabei kann die Kupplung eine Richtungs- oder Bereichs-, d.h. Gangwahlkupplung sein. Das weiche Einkuppeln ist notwendig, um Stöße beim Fahren zu vermeiden. Diese Notwendigkeit ist unmittelbar an dem Beispiel eines Gabelstaplers nachvollziehbar, der eine instabile Last trägt. Wenn der Gabelstapler eine automatische Schaltung verwendet, ist es extrem wichtig, weiche Schaltvorgänge zu haben, da der Fahrer nicht vorhersehen kann, wann ein Schaltvorgang auftreten wird. Wenn eine Last gehandhabt wird, ist ein Wechsel der Fahrtrichtung immer kritisch. So können alle Maschinen, die ein weiches Einkuppeln einer Kupplung erfordern, von der vorliegenden Erfindung profitieren.

Um die erfindungsgemäße Adaptierung durchführen zu können, müssen systemseitig bestimmte Voraussetzungen erfüllt sein. Grundvoraussetzung ist, dass die Drehzahl der Ausgangswelle des Drehmomentwandlers erfasst wird und einer adaptierbaren Steuerung für die jeweilige Kupplung zur Verfügung steht. Die Drehzahl der Eingangswelle des Drehmomentwandlers muss auf einem definierten Wert gehalten werden können, d.h. ein den Drehmomentwandler antreibender Motor sollte auf einer konstanten Drehzahl gehalten werden können. Hierzu kann die adaptierbare Steuerung eine spezielle Steuerschleife aufweisen.

Außerdem muss der hydraulische Kreislauf von der adaptierbaren Steuerung soweit definiert sein, dass die adaptierbare Steuerung durch Ansteuern eines Magnetventils zu einer bestimmten Zeit einen bestimmten Kupplungssteuerdruck einstellen kann. Dabei ist neben den Eigenschaften des Magnetventils beispielsweise auch die Öltemperatur in dem hydraulischen Kreislauf von Bedeutung, weil diese die Viskosität des Öls beeinflusst. Idealerweise berücksichtigt die Adaptive Steuerung oder ein Mikrocontroller des Magnetventils die Öltemperatur.

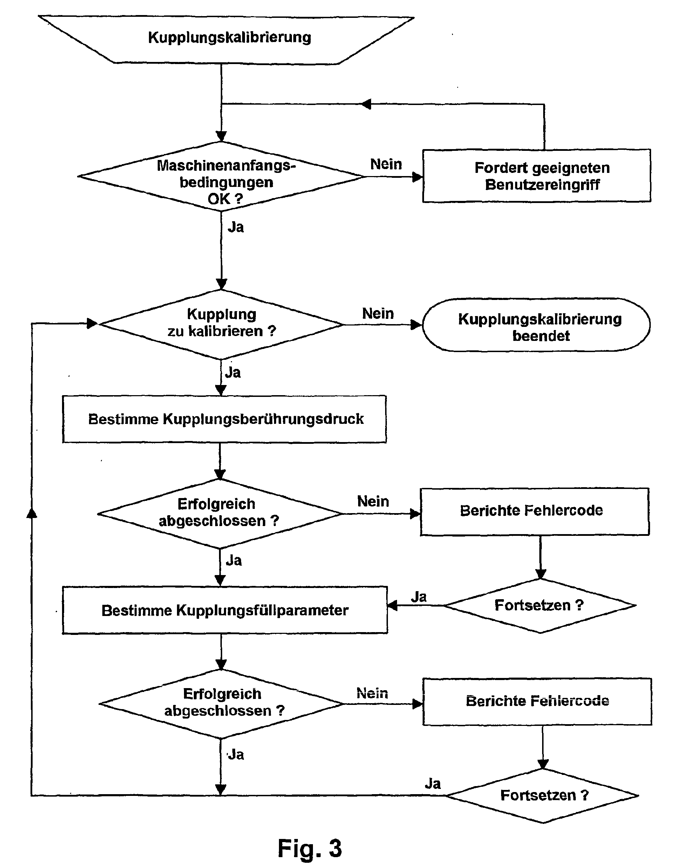

Zu Beginn einer konkreten Kupplungskalibrierung oder -adaptierung gemäß Fig. 3 wird eine Anzahl von Maschinenanfangsbedingungen überprüft. Die Motorgeschwindigkeit, d.h. die Drehzahl der Eingangwelle des Drehmomentwandlers muss stabil innerhalb eines bestimmten Bereichs liegen. Der Bereich kann in der Steuerung programmierbar sein. Die Grenzen dieses Bereichs hängen von der Art des Getriebes und der Fahrzeugverwendung ab. Die Getriebetemperatur muss in einem bestimmten Bereich liegen. Auch dieser Bereich kann in der Steuerung programmierbar sein und hängt von der Art des Getriebes und der Fahrzeugverwendung ab. Das Fahrzeug sollte still stehen. Die Feststellbremse des Fahrzeugs sollte betätigt sein. Die Steuerung sollte ein Signal empfangen, das das Feststellen der Feststellbremse bestätigt. Der Schalthebel sollte in der Neutralposition stehen. Nur wenn alle diese geforderten Maschinenanfangsbedingungen erfüllt sind, wird auf Anforderung der Iterationsprozess der Adaptierung gestartet, um die Parameter festzulegen, die die Kupplungsfüllung für jede Kupplung definieren und die in Schaltvorgänge mit dem gewünschten weichen Einkuppelverhalten resultieren.

Es versteht sich, dass neben einer Überprüfung der Maschinenanfangsbedingung zu Beginn der Kupplungsadaptierung auch die weitere Einhaltung dieser Bedingungen überwacht werden sollte. Sobald eine der Maschinenanfangsbedingungen nicht mehr erfüllt ist, kann das Adaptierungsverfahren automatisch abgebrochen werden. Dies gilt beispielsweise dann, wenn die Getriebetemperatur aus dem voreingestellten Bereich heraus ansteigt oder wenn die Motordrehzahl aus dem zugewiesenen Bereich heraus abfällt.

Das Flussdiagramm gemäß Fig. 3 zeigt eine Hauptschleife, die für jede zu kalibrierende Kupplung ausgeführt wird. Die Hauptschleife umfasst zwei Prozesse, in denen der Kupplungsgreifdruck und die Füllparameter bestimmt werden und die im Folgenden näher erläutert werden.

Versuche haben belegt, dass der Kupplungsgreifdruck ein guter Hinweis auf den Beginn der Stabilisierungsphase B der Füllphase 1 gemäß Fig. 1 ist. Deshalb wird eingangs der Kupplungsgreifdruck bestimmt. Hierzu wird zunächst eine beschleunigte Füllung der Kupplung durchgeführt, um sicherzustellen, dass alle Leitungen von dem Steuerventil zur Kupplung frisch mit Öl gefüllt sind. Nach einer kurzen Stabilisierung, hauptsächlich um es der Ausgangsdrehzahl des Drehmomentwandlers zu ermöglichen, sich zu stabilisieren, wird der Kupplungssteuerdruck auf die Kupplung in kleinen Schritten erhöht und gleichzeitig der Drehmomentübertrag durch die Kupplung mittels der Drehzahlsignale von der Eingangswelle und der Ausgangswelle des Drehmomentwandlers überwacht. Wenn der Drehmomentübertrag einen vorgegebenen Grenzwert übersteigt, wird der entsprechende Kupplungssteuerdruck als der Kupplungsgreifdruck beszimmt. Der Kupplungssteuerdruck, der auf die Kupplung ausgeübt wird, liegt zwischen bestimmten Grenzen, die abhängig von dem Typ der Kupplung und dem Typ des Getriebes sind. Diese Grenzen können als Parameter in der Steuerung programmiert werden. Wenn der dem Kupplungsgreifdruck entsprechende Drehmomentübertrag überschritten würde, bevor der erste Schritt der Drucksteigerungssequenz erfolgt ist, resultiert ein Fehlersignal. Dasselbe gilt, wenn der Kupplungsgreifdruck noch nicht festgestellt worden ist, wenn der maximal erlaubte Kupplungssteuerdruck bereits erreicht wurde.

Nach dem Ermitteln des Kupplungsgreifdrucks werden in dem nächsten Prozess die Füllparameter für die Kupplung ermittelt. Die vorliegende Erfindung ermöglicht grundsätzlich die Iteration einer Vielzahl von unterschiedlichen Parametern, die die Länge und den Verlauf der Füllphase 1 und der Modulationsphase 2 gemäß Fig. 1 bestimmen. Bei einer praktischen Implementation des Iterationsprozesses würde jedoch die Anpassung einer Vielzahl von Parametern schnell zu komplex werden und insbesondere einen viel zu großen Zeitaufwand erfordern. Um dies Problem zu lösen, wurden zwei wichtige Parameter ausgewählt, die die Füllphase 1 definieren und die sich zugleich auf die Modulationsphase auswirken. Nur diese ausgewählten Parameter werden in dem derzeit bevorzugten Ausführungsbeispiel der Erfindung iterativ festgelegt. Die anderen Parameter, welche die Länge und den Verlauf der Füllphase 1 und der Modulationsphase 2 definieren, werden auf feste Werte gesetzt, die auch schon bislang als für die jeweilige Kupplung geeignet bekannt waren. Beispielsweise wird der Kupplungssteuerdruck in der Modulationsphase 2 ausgehend von dem Kupplungssteuerdruck am Ende der Füllphase 1, d.h. von demjenigen in der Stabilisierungsphase B, bis zu dem maximalen Kupplungssteuerdruck wie in Fig. 1 im Wesentlichen linear erhöht.

Die beiden ausgewählten Parameter, die in der praktischen Implementierung der Erfindung iterativ adaptiert werden, sind die Kupplungsfüllung während der Phase A der Füllphase 1, kurz Füllung A genannt, und der Kupplungssteuerdruck in der Stabilisierungsphase B, kurz Druck B genannt. Die Füllung A entspricht der Fläche unter der Kupplungssteuerdruckkurve in der Phase A, die ein Maß der Ölmenge ist, welche in der Phase A in die Kupplung eingeleitet wird. Der nominelle Wert der Füllung A ist für jeden Typ von Kupplung in jedem Typ von Getriebe spezifisch, d.h. abhängig von der Konstruktion. Deshalb werden bei einer Population von Getrieben experimentell bestimmte Werte von gleichen Getrieben als Rückfall- und Startwert für die Füllung A verwendet.

Der Druck B ist das Drucknivau, das während der Stabilisierungsphase B der Füllphase 1 eingestellt wird. Um einen guten Rückfallwert für diesen Druck B für jede Kupplung zu erhalten, wurde die vorherige Bestimmung des Kupplungsgreifdrucks vorgenommen. Der Rückfall- und Ausgangswert des Drucks B steht in direkter Beziehung zu dem Kupplungsgreifdruck. Die spezielle Beziehung wird experimentell für jeden Typ von Kupplung in jedem Typ von Getriebe bei einer Population von gleichen Getrieben bestimmt und als Parameter in der Steuerung programmiert.

Die iterative Adaptierung besteht aus zwei getrennten Schleifen, die erste zur Adaptierung des Drucks B und die zweite zur Adaptierung der Füllung A. Die Hauptiteration des Drucks B ist einfach. Sie beginnt mit dem anhand des Kupplungsgreifdrucks festgelegten Ausgangswert für den Druck B und führt dann eine volle Iteration der Füllung A (s. u.) durch. Dann wird der Druck B adaptiert, und erneut wird eine volle Iteration der Füllung A durchgeführt. Die maximal erlaubte Anzahl von Iterationsschritten kann durch einen Parameter in der Steuerung programmiert werden. Die Schrittweite, in denen der Druck B adaptiert wird, ist ein Parameter und ist wiederum vom Typ der Kupplung und des Getriebes abhängig.

Der eigentliche Iterationsprozess, der gemäß der vorliegenden Erfindung erfolgt, ist die Adaptierung der Füllung A. Zu jedem Einkuppelvorgang während der Iteration wird die Zeitabfolge des Einkuppelvorgangs und des Verhaltens der Ausgangswelle des Drehmomentwandlers über den Einkuppelvorgang erfasst. Für die Bewertung eines realen Einkuppelvorgang werden dabei die folgenden Einzelschritte vorgenommen. Starte den Einkuppelvorgang. Setze die aktuelle Ausgangsdrehzahl des Drehmomentwandlers zu 100 %. Warte auf den Moment, an dem die Ausgangsdrehzahl des Drehmomentwandlers unter einen Prozentsatz fällt, der als der Punkt definiert ist, an dem die Ausgangsdrehzahl durch den Einkuppelvorgang betroffen ist. Dies ist ein Parameter, der in der Steuerung programmiert ist und der als Referenz für die Zeitabfolge des Einkuppelvorgangs verwendet wird. In dem Moment, in dem die Ausgangsdrehzahl des Drehmomentwandlers unter diesem Prozentsatz des Anfangswerts zu Beginn des Einkuppelvorgangs fällt, beginnt der Einkuppelvorgang die Ausgangsdrehzahl des Drehmomentwandlers zu beeinflussen, was unter normalen Bedingungen bedeutet, dass sich die Kraft an den Rädern des Fahrzeugs ändert. Dieses Ereignis ist wichtig für die Bewertung des Einkuppelvorgangs und hat (innerhalb einer definierten Toleranz) zu einem bestimmten vorgegebenen Zeitpunkt zu erfolgen. Dieser vorgegebene Zeitpunkt ist wieder ein kupplungs-/getriebeabhängiger Parameter und wird experimentell auf Basis einer Population von gleichen Getrieben festgelegt.

Dann wird gewartet, bis die Ausgangsdrehzahl des Drehmomentwandlers unter einen vorgegebenen minimalen Prozentsatz abgefallen ist. Dabei wird die Ausgangsdrehzahl des Drehmomentwandlers in kurzen Intervallen, beispielsweise alle fünf Millisekunden, abgetastet und diese Drehzahlwerte werden abgespeichert. Diese abgespeicherten Drehzahlwerte werden analysiert und dann an den gewünschten idealen Verlauf der Ausgangsdrehzahl des Drehmomentwandlers adaptiert, was auf unterschiedliche Weise erfolgen kann.

Bei der derzeit bevorzugten praktischen Implementation des neuen Verfahrens wird zunächst der ideale Verlauf der Drehzahl der Ausgangswelle unter Berücksichtigung der aufgezeichneten Drehzahlwerte bestimmt. Dabei wird beispielsweise eine Gaußkurve oder ein einfacher linearer Verlauf an den Anfangswert der Ausgangsdrehzahl des Drehmomentwandlers und die Dauer des Einkuppelvorgangs angepasst, d.h. skaliert. In den meisten Fällen ist ein linearer Verlauf ausreichend.

Für jeden Messwert der aufgezeichneten Drehzahlwerte des Drehmomentwandlers wird die Abweichung von diesem idealen Verlauf berechnet. Um Wechsel in der Richtung der Drehzahländerung zu bestrafen, weil ein Wiederansteigen der Ausgangsdrehzahl des Drehmomentwandlers während eines Einkuppelvorgangs unerwünscht ist, werden die so bestimmten Einzelwerte der Abweichung mit einem Faktor multipliziert, der proportional zu dem Maß ist, um das die Drehzahl gegenüber dem vorhergehenden Messwert wieder angestiegen ist. Dann wird die Summe dieser einzelnen Abweichung berechnet.

Um die erwartete Zeitabfolge des Drehzahlverlaufs zu berücksichtigen, wird diese Abweichungssumme mit dem erwarteten Zeitraum des Einkuppelvorgangs multipliziert und dann durch das Quadrat des tatsächlich gemessenen Zeitraums dividiert. Dies wird getan, um zu schnelle Drehzahländerungen mit einem hohen Wert der Abweichung zu bestrafen, da Sprünge bei der Drehzahl harten Schaltvorgängen bei dem Fahrzeug entsprechen. Das Quadrat des tatsächlich gemessenen Zeitraums wird bei dieser Berechnung durch das Quadrat des erwarteten Zeitraums nach unten begrenzt.

Da die Zeitabfolge des Drehzahlabfalls, die anzeigt, dass ein Einkuppelvorgang beginnt, ein wichtiger Teil der Bewertung ist, wird dann, wenn dieses Ereignis nicht innerhalb eines vorgegebenen akzeptierten Zeitraums erfolgt, kein Wert der Abweichung berechnet, da dieser Wert unsinnig wäre. Stattdessen wird dem Einkuppelvorgang direkt ein sehr hoher Wert der Abweichung zugeordnet.

Jedes Mal wenn der Wert der Abweichung des durchgeführten Einkuppelvorgangs besser, d.h. kleiner als der beste bisherige Wert ist, dann ist dieser neue Wert die zu schlagende Referenz, und die voreinstellbare Maximalanzahl von Versuchen, diesen Wert zu schlagen, wird zurückgesetzt. Dann wird ein neuer Einkuppelvorgang ausgelöst. Die beschriebene Iteration wird ausgeführt, bis ein bester (niedrigster) Wert der Abweichung durch Adaptieren der Füllung A innerhalb einer maximalen Anzahl von Versuchen nicht mehr verbessert werden konnte. Die Iteration wird gestoppt und der entsprechende Wert von Füllung A und der zugehörige Wert des Drucks B werden gespeichert. An diesem Punkt prüft die Hauptiteration, ob noch eine neue Iteration mit einem adaptierten Wert des Drucks B durchzuführen ist, und wird gegebenenfalls die Iteration der Füllung A mit diesem adaptierten Wert des Drucks B durchführen.

Wenn dieser Prozess abgeschlossen wurde, ist eine Matrix einer Anzahl von besten Einkuppelparametern verfügbar. Jetzt wird nach den Parametern für das Einkuppeln geschaut, die den geringsten Wert der Abweichung zeigten. Diese Parameter werden dauerhaft in der Steuerung gespeichert. Der gesamte Vorgang bis hierher dauert ungefähr 2 Minuten pro Kupplung. Dieser Wert ist der Mittelwert für eine Population von entsprechend adaptierten Getrieben.

Der beschriebene Iterationsprozess kann für alle möglichen Arten von Kupplungen und Getrieben verwendet werden. Um ihn an eine jeweilige Kombination einer Kupplung und eines Getriebes anzupassen, sind verschiedene bereits oben angegebene Parameter in die Steuerung einzugeben. Hierzu gehört die gewünschte zeitliche Abfolge des Einkuppelvorgangs nach seinem Auslösen und die hierbei akzeptierte Toleranz; die Präzision der Adaption, die bei den Füllparametern in jedem Schritt vorgenommen wird, d.h. insbesondere deren Schrittgröße; eine Verzögerung vor der Durchführung jedes nächsten Iterationsschritts; die Empfindlichkeit bei der Bestimmung der Auswirkung des Einkuppelvorgangs auf die Drehzahl der Ausgangswelle des Drehmomentwandlers; die Modulationssteigung, die für jeden Iterationsschritt bei dem durchgeführten Einkuppelvorgang verwendet wird, und die Auswertungskriterien, gemäß denen einem Einkuppelvorgang ein Wert als Maß für seine Abweichung von dem gewünschten Einkuppelverhalten zugeordnet wird.

## Patentansprüche

1. Verfahren zur Adaptierung einer automatisch angesteuerten Kupplung, die in einem Getriebe, insbesondere in einem Lastschaltgetriebe, eines Kraftfahrzeugs einem Drehmomentwandler nachgeschaltet ist und die über einen Kupplungssteuerdruck beim Einkuppeln angesteuert wird,
wobei ein Verlauf des Kupplungssteuerdrucks über der Zeit eingestellt wird, um einen Einkuppelvorgang mit vorgegebenen Charakteristika zu realisieren,
ein Vorgang ausgelöst wird, in dem sich die Drehzahl einer Ausgangswelle des Drehmomentwandlers zur Anpassung an die tatsächliche Geschwindigkeit des Fahrzeugs beim Einkuppeln der Kupplung ändert,
für diesen Vorgang ein idealer Verlauf der Drehzahl der Ausgangswelle über der Zeit festgelegt wird, der dem Einkuppelvorgang mit vorgegebenen Charakteristika entspricht,
der tatsächliche Verlauf der Drehzahl der Ausgangswelle über der Zeit bei dem Vorgang gemessen und mit dem idealen Verlauf verglichen wird, um Abweichungen festzustellen und
der Verlauf des Kupplungssteuerdrucks über der Zeit beim Überschreiten vorbestimmter Abweichungen des tatsächlichen von dem idealen Verlauf der Drehzahl der Ausgangswelle über der Zeit automatisch verändert wird, um diese Abweichungen zu reduzieren und als Vorgang, in dem sich die Drehzahl der Ausgangswelle des Drehmomentwandlers zur Anpassung an die tatsächliche Geschwindigkeit des Fahrzeugs beim Einkuppeln der Kupplung ändert, das Einkuppeln der Kupplung bei laufendem Motor und stehendem Kraftfahrzeug mit blockierten Antriebsrädern gewählt wird.

2. Verfahren nach Anspruch 1, **dadurch gekennzeichnet, dass** bei dem Vorgang die Drehzahl einer Einganswelle des Drehmomentwandlers konstant gehalten wird.

3. Verfahren nach Anspruch 1 oder 2, **dadurch gekennzeichnet, dass** der ideale Verlauf der Drehzahl der Ausgangswelle über der Zeit unter Verwendung mindestens einer mathematischen Funktion festgelegt wird.

4. Verfahren nach Anspruch 3, **dadurch gekennzeichnet, dass** der ideale Verlauf der Drehzahl der Ausgangswelle über der Zeit durch eine Gaußfunktion festgelegt wird.

5. Verfahren nach einem der Ansprüche 1 bis 4, **dadurch gekennzeichnet, dass** der ideale Verlauf der Drehzahl der Ausgangswelle über der Zeit für den Vergleich mit dem tatsächlichen Verlauf auf die tatsächliche absolute Drehzahländerung während des Vorgangs skaliert wird.

6. Verfahren nach einem der Ansprüche 1 bis 5, **dadurch gekennzeichnet, dass** beim Vergleich des tatsächlichen Verlaufs der Drehzahl der Ausgangswelle über der Zeit mit dem idealen Verlauf die Abweichungen nach einer Methode des quadratischen Abstands der Verläufe bestimmt werden und dass beim Ändern des Verlaufs des Kupplungssteuerdrucks über der Zeit der quadratische Abstand der Verläufe minimiert wird.

7. Verfahren nach einem der Ansprüche 1 bis 6, **dadurch gekennzeichnet, dass** nach dem automatischen Ändern des Verlaufs des Kupplungssteuerdrucks über der Zeit der Vorgang wiederholt wird, dass der tatsächliche Verlauf der Drehzahl der Ausgangswelle über der Zeit bei der Wiederholung des Vorgangs gemessen und mit dem idealen Verlauf verglichen wird und dass der Verlauf des Kupplungssteuerdrucks über der Zeit beim Überschreiten vorbestimmter Abweichungen des tatsächlichen von dem idealen Verlauf erneut automatisch verändert wird, um diese Abweichungen weiter zu reduzieren, bis die vorbestimmten Abweichungen nicht mehr überschritten werden.

8. Verfahren nach einem der Ansprüche 1 bis 7, **dadurch gekennzeichnet, dass** der geänderte Verlauf des Kupplungssteuerdrucks über der Zeit gespeichert und solange beim Einkuppeln der Kupplung verwendet wird, bis die Adaptierung erneut durchgeführt wird.

9. Verfahren nach einem der Ansprüche 1 bis 8, **dadurch gekennzeichnet, dass** die Adaptierung für jede Kupplung des Getriebes des Kraftfahrzeugs durchgeführt wird.

10. System zur Adaptierung einer automatisch angesteuerten Kupplung, die in einem Getriebe, insbesondere in einem Lastschaltgetriebe, eines Kraftfahrzeugs einem Drehmomentwandler nachgeschaltet ist, mit
Mitteln zum Speichern des Verlaufs eines Kupplungssteuerdrucks über der Zeit, mit dem die Kupplung beim Einkuppeln angesteuert wird, und
Mitteln zum Einstellen des Verlaufs des Kupplungssteuerdrucks über der Zeit um einen Einkuppelvorgang mit vorgegebenen Charakteristika zu realisieren,
Mitteln zum Starten des Systems und Auslösen oder Registrieren eines Vorgangs, in dem sich die Drehzahl einer Ausgangswelle des Drehmomentwandlers zur Anpassung an die tatsächliche Geschwindigkeit des Fahrzeugs beim Einkuppeln der Kupplung ändert,
Mitteln zum Speichern eines für diesen Vorgang idealen Verlaufs der Drehzahl der Ausgangswelle über der Zeit, der dem Einkuppelvorgang mit vorgegebenen Charakteristika entspricht,
Mitteln zum Messen des tatsächlichen Verlaufs der Drehzahl der Ausgangswelle über der Zeit bei dem Vorgang und
Mitteln zum Vergleichen des tatsächlichen Verlaufs der Drehzahl der Ausgangswelle über der Zeit mit dem idealen Verlauf, um Abweichungen festzustellen, wobei
die Mittel zum Einstellen des Verlaufs des Kupplungssteuerdrucks über der Zeit beim Überschreiten vorbestimmter Abweichungen des tatsächlichen von dem idealen Verlauf der Drehzahl der Ausgangswelle über der Zeit den Verlauf des Kupplungssteuerdrucks über der Zeit automatisch verändern, um diese Abweichungen zu reduzieren und
die Mittel zum Auslösen oder Registrieren das Einkuppeln der Kupplung bei laufendem Motor und stehendem Kraftfahrzeug mit blockierten Antriebsrädern auslösen bzw. registrieren.

11. System nach Anspruch 10, **dadurch gekennzeichnet, dass** die Mittel zum Auslösen die Drehzahl einer Einganswelle des Drehmomentwandlers bei dem ausgelösten Vorgang konstant halten.

12. System nach Anspruch 10 oder 11, **dadurch gekennzeichnet, dass** die Mittel zum Speichern des idealen Verlaufs der Drehzahl der Ausgangswelle über der Zeit mindestens eine den idealen Verlauf beschreibende mathematischen Funktion speichern.

13. System nach Anspruch 12, **dadurch gekennzeichnet, dass** die Mittel zum Speichern des idealen Verlaufs der Drehzahl der Ausgangswelle über der Zeit eine Gaußfunktion speichern.

14. System nach einem der Ansprüche 10 bis 13, **dadurch gekennzeichnet, dass** die Mittel zum Vergleichen den idealen Verlauf der Drehzahl der Ausgangswelle über der Zeit auf die tatsächliche absolute Drehzahländerung während des Vorgangs skalieren.

15. System nach einem der Ansprüche 10 bis 14, **dadurch gekennzeichnet, dass** die Mittel zum Vergleichen die Abweichungen nach einer Methode des quadratischen Abstands der Verläufe bestimmen und dass die Mittel zum Einstellen des Verlaufs des Kupplungssteuerdrucks über der Zeit den quadratischen Abstand der Verläufe minimieren.

16. System nach einem der Ansprüche 10 bis 15, **dadurch gekennzeichnet, dass** nach dem automatischen Ändern des Verlaufs des Kupplungssteuerdrucks über der Zeit die Mittel zum Auslösen oder Registrieren den Vorgang wiederholen bzw. das Wiederholen des Vorgangs registrieren, dass die Mittel zum Messen den tatsächlichen Verlauf der Drehzahl der Ausgangswelle über der Zeit bei der Wiederholung des Vorgangs messen und die Mittel zum Vergleichen den tatsächlichen mit dem idealen Verlauf vergleichen und dass die Mittel zum Einstellen den Verlauf des Kupplungssteuerdrucks über der Zeit beim Überschreiten vorbestimmter Abweichungen des tatsächlichen von dem idealen Verlauf erneut automatisch verändern, um diese Abweichungen weiter zu reduzieren, bis die Mittel zum Vergleichen feststellen, dass die vorbestimmten Abweichungen nicht mehr überschritten werden.

17. System nach einem der Ansprüche 10 bis 16, **dadurch gekennzeichnet, dass** die Mittel zum Speichern des Verlaufs des Kupplungssteuerdrucks über der Zeit solange für die Verwendung beim Einkuppeln der Kupplung speichern, bis das System erneut gestartet wird.

18. System nach einem der Ansprüche 10 bis 17, **dadurch gekennzeichnet, dass** die Mittel zum Speichern des Verlaufs des Kupplungssteuerdrucks über der Zeit separate Speicher für jede Kupplung des Getriebes des Kraftfahrzeugs aufweisen.

## Claims

1. A method for an adaptation of an automatically controlled clutch, the clutch being arranged in a transmission system of a vehicle, in particular in a transmission system shifted under load, located downstream of a torque converter, wherein the clutch is controlled by means of a control pressure for the clutch during engagement of the clutch, wherein
the signal of the control pressure of the clutch over time is controlled such that predetermined characteristics for the process of engaging the clutch are approximated,
a process is triggered for changing a rotational speed of an output shaft of the torque converter for an adaptation of the rotational speed to an actual velocity of the vehicle during engagement of the clutch,
for said process an ideal signal for the rotational speed of the output shaft over time is determined wherein the ideal signal corresponds to the process of engaging the clutch with predetermined characteristics,
the actual signal of the rotational speed of the output shaft over time is measured during the process and compared with the ideal signal in order to determine deviations and
the signal of the control pressure of the clutch over time is automatically changed when exceeding predetermined deviations of the actual signal from the ideal signal of the rotational speed of the output shaft over time in order to reduce said deviations, wherein as the process, in which the rotational speed of the output shaft of the torque converter for an adaptation with the actual speed of the vehicle during engagement of the clutch is changed, the process of engaging of the clutch for running engine, resting vehicle and blocked wheels is chosen.

2. Method of claim 1, wherein during the process the rotational speed of the input shaft of the torque converter is held constant.

3. Method of claim 1 or 2, wherein the ideal signal of the rotational speed of the output shaft over time is determined by means of at least one mathematical function.

4. Method of claim 3, wherein the ideal signal of the rotational speed of the output shaft over time is determined by means of a Gaussian function.

5. Method of one of claims 1 to 4, wherein for the step of comparing with the actual signal the ideal signal of the rotational speed of the output shaft over time is scaled to the actual absolute change of the rotational speed during the process.

6. Method of one of claims 1 to 5, wherein in the step of comparing the actual signal of the output speed of the output shaft over time with the ideal signal the deviations are determined under use of the square distances of the signals and wherein the signal of the control pressure of the clutch over time is changed under minimization the square distances of the signals.

7. Method of one of claims 1 to 6, wherein subsequent to the automatic change of the signal of the control pressure of the clutch over time the process is repeated, wherein the actual signal of the rotational speed of the output shaft over time is measured when repeating the process and compared with the ideal signal and wherein the signal of the control pressure of the clutch over time is again automatically changed in case of predetermined deviations of the actual signal from the ideal signal being exceeded in order to further reduce said deviations unless the predetermined deviations are no longer exceeded.

8. Method according to one of claims 1 to 7, wherein the changed signal of the control pressure of the clutch over time is stored and used for engaging the clutch until another adaptation process is performed.

9. Method according to of claims 1 to 8, wherein the adaptation process is done for each clutch of the transmission system of the vehicle.

10. System for the adaptation of an automatically controlled clutch, the clutch being arranged in a transmission system of a vehicle, in particular in a transmission system shiftable under load, and being located downstream of a torque converter with
means for storing the signal of the control pressure of the clutch over time being used for controlling the clutch during the process of an engagement of the clutch, and
means for adjusting the signal of the control pressure of the clutch over time in order to approximate an engagement of the clutch with predetermined characteristics,
means for starting the system and for triggering or registering a process in which the rotational speed of an output shaft of the torque converter is changed for an approximation of the actual speed of the vehicle when engaging the clutch,
means for storing an ideal signal of the rotational speed of the output shaft over time for such process, wherein such ideal signal corresponds to the process of engaging the clutch with predetermined characteristics,
means for measuring the actual signal of the rotational speed of the output shaft over time during said process and
means for comparing the actual signal of the rotational speed of the output shaft over time with the ideal signal in order to determine deviations, wherein
the means for adjusting the signal of the control pressure of the clutch over time automatically change the signal of the control pressure of the clutch over time in case of exceeding predetermined deviations of the actual signal from the ideal signal of the rotational speed of the output shaft over time in order to reduce such deviations and
the means for triggering or registration trigger or register the engagement of the clutch for running engine, resting vehicle and blocked wheels.

11. System of claim 10, wherein the means for triggering hold the rotational speed of the input shaft of the torque converter constant during the triggered process.

12. System of claim 10 or 11, wherein the means for storing the ideal signal of the rotational speed of the output shaft over time store at least one mathematical function suitable for modeling the ideal signal.

13. System of claim 12, wherein the means for storing store the ideal signal of the rotational speed of the output shaft over time as a Gaussian function.

14. System of one of claims 10 to 13, wherein the means for comparing scale the ideal signal of the rotational speed of the output shaft over time to the actual absolute change of the rotational speed during the process.

15. System according to one of claims 10 to 14, wherein the means for comparing determine the deviations according to the method of the square distances of the signals and wherein the means for adjusting the signal of the control pressure of the clutch over time minimize the square distance of the signals.

16. System of one of claims 10 to 15, wherein subsequent to the automatic change of the signal of the control pressure of the clutch over time the means for triggering and registering repeat the process or register that the process is repeated, wherein the means for measuring measure the actual signal of the rotational speed of the output shaft over time when repeating the process, wherein the means for comparing compare the actual signal with the ideal signal, wherein the means for adjusting again automatically change the signal of the control pressure of the clutch over time in case of predetermined deviations of the actual signal from the ideal signal being exceeded in order to further reduce said deviations unless the means for comparing detect that the predetermined deviations are no longer exceeded.

17. System according to one of claims 10 to 16, wherein the means for storing the signal of the control pressure of the clutch over time store the signal for a use during engagement of the clutch unless the system is again restarted.

18. System according to one of claims 10 to 17, wherein the means for storing the signal of the control pressure of the clutch over time comprises separate storing means for each clutch of the transmission system of the vehicle.

## Revendications

1. Procédé pour l'adaptation d'un accouplement activé de façon automatique, qui est placé en aval d'un convertisseur de couple dans une boîte de vitesses, en particulier dans une boîte de vitesses commandée en charge, d'un véhicule automobile, qui est actionné par une pression de commande d'accouplement lors de l'embrayage,
une courbe de la pression de commande d'accouplement étant réglée par rapport au temps afin de réaliser une opération d'embrayage avec des caractéristiques prédéfinies,
une opération étant déclenchée lors de laquelle le régime d'un arbre de sortie du convertisseur de couple varie pour l'adaptation à la vitesse réelle du véhicule lors de l'embrayage de l'accouplement,
une courbe idéale du régime de l'arbre de sortie en fonction du temps étant définie pour cette opération, laquelle courbe correspond à l'opération d'embrayage avec des caractéristiques prédéfinies,
la courbe réelle du régime de l'arbre de sortie par rapport au temps étant mesurée lors de l'opération et étant comparée avec la courbe idéale, afin de déterminer des écarts et
la courbe de la pression de commande d'accouplement en fonction du temps étant modifiée automatiquement en cas de dépassement d'écarts prédéfinis entre la courbe réelle et la courbe idéale du régime de l'arbre de sortie, afin de réduire ces écarts et l'embrayage de l'accouplement avec le moteur en marche et le véhicule à l'arrêt avec des roues d'entraînement bloquées étant choisi comme opération pendant laquelle le régime de l'arbre de sortie du convertisseur de couple varie pour l'adaptation à la vitesse réelle du véhicule lors de l'embrayage de l'accouplement.

2. Procédé selon la revendication 1, **caractérisé en ce que**, lors de l'opération, le régime d'un arbre d'entrée du convertisseur de couple est maintenu constant.

3. Procédé selon la revendication 1 ou 2, **caractérisé en ce que** la courbe idéale du régime de l'arbre de sortie par rapport au temps est définie en utilisant au moins une fonction mathématique.

4. Procédé selon la revendication 3, **caractérisé en ce que** la courbe idéale du régime de l'arbre de sortie par rapport au temps est définie par une fonction gaussienne.

5. Procédé selon l'une quelconque des revendications 1 à 4, **caractérisé en ce que** la courbe idéale du régime de l'arbre de sortie par rapport au temps est graduée pour la comparaison avec la courbe réelle jusqu'à la variation absolue réelle du régime pendant l'opération.

6. Procédé selon l'une quelconque des revendications 1 à 5, **caractérisé en ce que**, lors de la comparaison de la courbe réelle du régime de l'arbre de sortie par rapport au temps avec la courbe idéale, les écarts sont déterminés selon une méthode de la distance au carré des courbes et **en ce que**, en cas de variation de la courbe de la pression de commande d'accouplement en fonction du temps, la distance au carré des courbes est minimisée.

7. Procédé selon l'une quelconque des revendications 1 à 6, **caractérisé en ce que**, après la modification automatique de la courbe de la pression de commande d'accouplement en fonction du temps, l'opération est répétée, **en ce que** la courbe réelle du régime de l'arbre de sortie par rapport au temps est mesurée lors de la répétition de l'opération et comparée avec la courbe idéale et **en ce que** la courbe de la pression de commande d'accouplement par rapport au temps est modifiée à nouveau automatiquement en cas de dépassement d'écarts prédéfinis de la courbe réelle par rapport à la courbe idéale, afin de réduire encore ces écarts jusqu'à ce que les écarts prédéfinis ne soient plus dépassés.

8. Procédé selon l'une quelconque des revendications 1 à 7, **caractérisé en ce que** la courbe modifiée de la pression de commande d'accouplement par rapport au temps est stockée et utilisée lors de l'embrayage de l'accouplement jusqu'à ce que l'adaptation soit effectuée à nouveau.

9. Procédé selon l'une quelconque des revendications 1 à 8, **caractérisé en ce que** l'adaptation est effectuée pour chaque accouplement de la boîte de vitesses du véhicule.

10. Système pour l'adaptation d'un accouplement activé automatiquement, qui est monté en aval d'un convertisseur de couple dans une boîte de vitesses, en particulier une boîte de vitesses commandée en charge, d'un véhicule, comprenant
des moyens pour la mémorisation de la courbe d'une pression de commande d'accouplement en fonction du temps, avec lequel l'accouplement est activé lors de l'embrayage, et
des moyens pour le réglage de la courbe de la pression de commande d'accouplement en fonction du temps, afin de réaliser une opération d'embrayage avec des caractéristiques prédéfinies,
des moyens pour le démarrage du système et le déclenchement ou l'enregistrement d'une opération, lors de laquelle le régime d'un arbre de sortie du convertisseur de couple varie pour l'adaptation à la vitesse réelle du véhicule lors de l'embrayage de l'accouplement,
des moyens pour la mémorisation d'une courbe, idéale pour cette opération, du régime de l'arbre de sortie en fonction du temps, qui correspond à l'opération d'embrayage avec des caractéristiques prédéfinies,
des moyens pour la mesure de la courbe réelle du régime de l'arbre de sortie en fonction du temps pendant l'opération et
des moyens pour la comparaison de la courbe réelle du régime de l'arbre de sortie en fonction du temps avec la courbe idéale, afin de déterminer des écarts,
les moyens pour le réglage de la courbe de la pression de commande d'accouplement en fonction du temps modifiant automatiquement la courbe de la pression de commande d'accouplement en fonction du temps en cas de dépassement d'écarts prédéfinis entre la courbe réelle et la courbe idéale du régime de l'arbre de sortie en fonction du temps, afin de réduire ces écarts, et
les moyens pour le déclenchement ou l'enregistrement déclenchant et/ou enregistrant l'embrayage de l'accouplement avec le moteur en marche et le véhicule à l'arrêt avec des roues d'entraînement bloquées.

11. Système selon la revendication 10, **caractérisé en ce que** les moyens pour le déclenchement maintiennent constant le régime d'un arbre d'entrée du convertisseur de couple lors de l'opération déclenchée.

12. Système selon la revendication 10 ou 11, **caractérisé en ce que** les moyens pour le stockage de la courbe idéale du régime de l'arbre de sortie en fonction du temps mémorisent au moins une fonction mathématique décrivant la courbe idéale.

13. Système selon la revendication 12, **caractérisé en ce que** les moyens pour le stockage de la courbe idéale du régime de l'arbre de sortie en fonction du temps mémorisent une fonction gaussienne.

14. Système selon l'une quelconque des revendications 10 à 13, **caractérisé en ce que** les moyens pour comparer la courbe idéale du régime de l'arbre de sortie en fonction du temps sont gradués jusqu'à la variation absolue et réelle du régime pendant l'opération.

15. Système selon l'une quelconque des revendications 10 à 14, **caractérisé en ce que** les moyens pour comparer déterminent les écarts selon une méthode de l'espacement au carré des courbes et **en ce que** les moyens pour le réglage de la courbe de la pression de commande d'accouplement en fonction du temps minimisent la distance au carré des courbes.

16. Système selon l'une quelconque des revendications 10 à 15, **caractérisé en ce que**, après la modification automatique de la courbe de la pression de commande de l'accouplement en fonction du temps, les moyens pour le déclenchement ou l'enregistrement répètent l'opération ou enregistrent la répétition de l'opération, **en ce que** les moyens pour la mesure mesurent la courbe réelle du régime de l'arbre de sortie en fonction du temps de la répétition de l'opération et les moyens pour la comparaison comparent la courbe réelle avec la courbe idéale et **en ce que** les moyens pour le réglage modifient de nouveau automatiquement la courbe de la pression de commande d'accouplement en fonction du temps en cas de dépassement d'écarts prédéfinis de la courbe réelle par rapport à la courbe idéale, afin de réduire encore ces écarts jusqu'à ce que les moyens pour la comparaison constatent que les écarts prédéterminés ne sont plus dépassés.

17. Système selon l'une quelconque des revendications 10 à 16, **caractérisé en ce que** les moyens pour le stockage de la courbe de la pression de commande d'accouplement en fonction du temps mémorisent pour l'utilisation lors de l'embrayage de l'accouplement jusqu'à ce que le système soit redémarré.

18. Système selon l'une quelconque des revendications 10 à 17, **caractérisé en ce que** les moyens de stockage de la courbe de la pression de commande d'accouplement en fonction du temps présentent des mémoires séparées pour chaque accouplement de la boîte de vitesses du véhicule.
